# EUROPÄISCHE PATENTANMELDUNG

(11) **EP 3 670 703 A1**
(43) Veröffentlichungstag der Anmeldung: **24.06.2020**
(21) Anmeldenummer: 19209022.3
(22) Anmeldetag: 14.11.2019
(51) Int. Cl.: C25B 1/04, C23C 4/00, C25B 9/20, C25B 15/08, H01M 8/00

(54) **GASDIFFUSIONSKÖRPER**

(30) Priorität: 17.12.2018 DE 102018132399
(71) Anmelder: Forschungszentrum Jülich GmbH, 52425 Jülich (DE)
(72) Erfinder: Saba, Sayed Mobasher, 40221 Düsseldorf (DE)
(74) Vertreter: Paul & Albrecht Patentanwälte PartG mbB

(57) **Zusammenfassung**

Die vorliegende Erfindung betrifft einen Gasdiffusionskörper (5) umfassend zumindest eine Durchgangsöffnungen (9) aufweisende Basisschicht (7a, 7b, 7c), die aus elektrisch leitendem Streckmetall, aus elektrisch leitendem Gewebe oder Gitter oder aus einer elektrisch leitenden, mit Durchgangsöffnungen versehenen Metallplatte hergestellt ist, wobei der Gasdiffusionskörper (5) zumindest eine Zusatzschicht (8a, 8b, 8c) aufweist, die als pulverförmiges Material unter Einsatz eines thermischen Spritzverfahrens aufgetragen ist, wobei das pulverförmige Material zumindest zum Großteil aus Partikeln aus elektrisch leitendem Material besteht, insbesondere zu einem Anteil von wenigstens 70 Gew.-%, bevorzugt zu einem Anteil von wenigstens 90 Gew.-%.

## Beschreibung

Die vorliegende Erfindung betrifft einen Gasdiffusionskörper umfassend zumindest eine Durchgangsöffnungen aufweisende Basisschicht, die aus elektrisch leitendem Streckmetall, aus elektrisch leitendem Gewebe, Gitter oder Vlies oder aus einer elektrisch leitenden, mit Durchgangsöffnungen versehenen Metallplatte hergestellt ist. Ferner betrifft die Erfindung eine elektrochemische Zelle mit einem solchen Gasdiffusionskörper sowie ein Verfahren zur Herstellung eines solchen Gasdiffusionskörpers.

Elektrochemische Zellen sind im Stand der Technik beispielsweise in Form von Elektrolysezellen bekannt. Elektrolysezellen dienen dazu, über einen elektrischen Strom eine chemische Reaktion hervorzurufen, bei der elektrische Energie zumindest teilweise in chemische Energie umgewandelt wird. Mit einer solchen Elektrolysezelle lässt sich insbesondere Wasser in Wasserstoff- und Sauerstoffgas aufspalten. Eine Elektrolysezelle umfasst als zentrale Komponenten zwei Elektroden und einen zwischen den Elektroden angeordneten Elektrolyten, der beispielsweise durch eine protonenleitende Membran gebildet werden kann. Die Elektroden sind jeweils über einen Gasdiffusionskörper von einer Bipolarplatte getrennt. Die Bipolarplatten dienen dazu, einzelne elektrochemische Zellen eines so genannten Stacks voneinander zu trennen.

Zur Aufspaltung von Wasser wird die Pluspol-Seite der Elektrolysezelle mit vollentsalztem Wasser gespeist. An der Anode wird das vollentsalzte Wasser in Sauerstoffgas einerseits und in Protonen (H⁺) andererseits zerlegt. Die Protonen durchdringen den Elektrolyten und rekombinieren an der Kathode zu Wasserstoffgas. Die an den Elektroden anliegenden Gasdiffusionskörper haben zum einen die Aufgabe, die Bipolarplatten elektrisch mit den Elektroden zu verbinden. Hierzu müssen die Gasdiffusionskörper elektrisch leitfähig sein. Zum anderen erfolgt über sie der Wassertransport zu den Elektroden sowie der Gasabtransport von den Elektroden, wozu die Gasdiffusionskörper porös sein müssen. Überdies stützen Gasdiffusionskörper die dünne Membran einer Elektrolysezelle und sorgen so auch in einem Druckbetrieb für die mechanische Stabilität der Membran, insbesondere in Differenzdirektbetrieb. Die Porengröße der Gasdiffusionskörper ist von den Materialeigenschaften der Membran sowie von dem Betriebsdruck der Elektrolysezelle abhängig. Ein hoher einseitiger Druck führt dazu, dass die dünne Membran und die Elektroden in die Poren der Gasdiffusionskörper gedrückt werden, wodurch die Membran reißen kann. Daher sollte ein Gasdiffusionskörper idealerweise zum einen möglichst große Poren haben, um viel Wasser zu den Elektroden zu transportieren, zum anderen jedoch feine Poren besitzen, um das Reißen der dünnen Membran infolge mechanischer Beanspruchung zu verhindern.

Gasdiffusionskörper können gemäß einer ersten Alternative ein- oder mehrschichtig aus Durchgangsöffnungen aufweisenden, elektrisch leitenden Streckmetallen hergestellt sein. Streckmetalle sind Metallbleche, die bei Ihrer Herstellung zeitgleich eingeschnitten und gestreckt werden. Die Geometrie des Streckmetalls ist dabei abhängig vom Werkzeugprofil. Ebenso können Gasdiffusionskörper ein- oder mehrlagig aus Durchgangsöffnungen definierenden, elektrisch leitenden Geweben oder Gittern oder ein- oder mehrlagig aus elektrisch leitenden, mit Durchgangsöffnungen versehenen Metallplatten gefertigt werden. Die Porösität der Gasdiffusionskörper wird bei Streckmetallen, Geweben und Gittern jeweils durch die Maschenweite und bei mit Durchgangsöffnungen versehenen Metallplatten durch die Größe der Durchgangsöffnungen bestimmt. Zur Herstellung mehrschichtiger Gasdiffusionskörper werden die einzelnen Schichten beispielsweise in einem Walzverfahren kraftschlüssig oder in einem Schweißverfahren formschlüssig miteinander verbunden. Durch ein Verbinden von unterschiedliche Porösitäten aufweisenden Schichten lassen sich auch gradierte Gasdiffusionskörper fertigen. Mit allen Varianten der ersten Alternative geht der gemeinsame Nachteil einher, dass sich die Größe der Durchgangsöffnungen nicht beliebig klein einstellen lässt. Streckmetalle werden beispielsweise erst beginnend mit Maschenweiten von 0,5 mm angeboten. Entsprechend besteht bei solchen Gasdiffusionskörpern grundsätzlich die Gefahr einer Beschädigung der Membran und/oder der Elektroden.

Gemäß einer zweiten Alternative können als Gasdiffusionskörper auch Sinterkörper verwendet, die in erster Linie aus Pulvern oder Fasern aus elektrisch leitfähigem Material hergestellt sind. Sinterkörper weisen normalerweise eine Schichtdicke zwischen 50 und 500 µm auf. Sie entstehen in mehrstufigen Herstellungsprozessen aus einer Mischung von Partikeln, Lösungsmitteln und Bindemitteln, die zu einer Paste angerührt werden. Die Paste wird in einem ersten Schritt über eine Schlitzdüse auf eine Folie aufgetragen. Dieser Prozess wird als Foliengießen bezeichnet. Die hergestellte dünne Paste wird anschließend für 14 bis 24 Stunden in einem Sinterofen eingeschlossen. In dieser Zeit wird der Ofen aufgewärmt, das Lösungsmittel ausgetrieben und der Ofen wieder abgekühlt. Der Sinterprozess selbst wird bei Temperaturen von bis zu 1000°C durchgeführt. Nach Entnahme des Sinterkörpers aus dem Ofen schrumpft dieser um bis zu 25%. Ein wesentlicher Vorteil solcher Sinterkörper besteht darin, dass diese mit sehr feinen und wenige Mikrometer großen Poren gefertigt werden können. Nachteilig ist allerdings, dass sich die Porengeometrie prozessbedingt nur schwer einstellen lässt. Auch der Skalierbarkeit sind Grenzen gesetzt. Ein weiterer Nachteil besteht darin, dass die Fertigungszeit, die in erster Linie durch die geringen Aufheizraten des Sinterofens bedingt sind, sehr lang ist. Zudem haben die feinen und dünnen porösen Sinterkörper eine geringe mechanische Stabilität, die sich nachteilig bei dynamischem Druckbetrieb der Elektrolyse auswirken kann. Auch besteht eine erhöhte Bruchgefahr bei der Assemblierung von Sinterkörpern größerer Dimensionen. Dies erfordert die Assemblierung mittels Saugnäpfen und erschwert eine Skalierung.

Darüber hinaus können beide der zuvor beschriebenen Alternativen auch miteinander kombiniert werden, indem zur Herstellung eines Gasdiffusionskörpers Schichten aus Streckmetall, Gittern oder dergleichen im Rahmen eines Walz- oder Schweißprozesses mit einem Sinterkörper verbunden werden. Ein solches Verbinden birgt allerdings ebenfalls große Herausforderungen, da durch die geringe mechanische Stabilität des Sinterkörpers ein hohes Bruchrisiko besteht. Darüber hinaus erfolgt das Verbinden in einem gesonderten Verfahrensschritt und geht entsprechend mit einem zusätzlichen Zeit- und Kostenaufwand einher.

Ausgehend von diesem Stand der Technik ist es eine Aufgabe der vorliegenden Erfindung, einen Gasdiffusionskörper der eingangs genannten Art mit alternativem Aufbau zu schaffen, der die zuvor beschriebenen Nachteile zumindest teilweise beseitigt. Darüber hinaus ist es eine Aufgabe der vorliegenden Erfindung, eine elektrochemische Zelle mit einem solchen Gasdiffusionskörper sowie ein Verfahren zur Herstellung eines solchen Gasdiffusionskörpers zu schaffen.

Zur Lösung dieser Aufgabe schafft die vorliegende Erfindung einen Gasdiffusionskörper der eingangs genannten Art, der dadurch gekennzeichnet ist, dass der Gasdiffusionskörper zumindest eine Zusatzschicht aufweist, die als pulverförmiges Material unter Einsatz eines thermischen Spritzverfahrens aufgetragen ist, wobei das pulverförmige Material zumindest zum Großteil aus Partikeln aus elektrisch leitendem Material besteht, insbesondere zu einem Anteil von wenigstens 70 Gew.-%, bevorzugt zu einem Anteil von wenigstens 90 Gew.-%.

Mit anderen Worten schlägt die vorliegende Erfindung vor, pulverförmiges Material unter Einsatz eines thermischen Spritzverfahrens auf eine Basisschicht aufzutragen, anstatt einen Sinterkörper mit einer Basisschicht zu verbinden, wie es zuvor beschrieben wurde. Ein wesentlicher Vorteil des thermischen Spritzens besteht darin, dass sich vergleichbar kleine Porengrößen wie beim Sintern erzielen lassen, wobei jedoch die Geometrie der Poren besser einstellbar ist. Entsprechend kann die Porengröße der Zusatzschicht sehr genau an die Betriebsbedingungen einer Elektrolyse angepasst werden. Thermische Spritzverfahren haben gegenüber dem Sintern ferner deutliche Vorteile hinsichtlich der Zykluszeiten. Die Depositionsraten in diesen Prozessen können wenige Gramm bis zu einigen Kilogramm betragen. Hierdurch können die Fertigungszeiten gegenüber dem langen Ofenprozess beim Sintern stark verkürzt werden. Auch die Skalierbarkeit ist in keiner Weise eingeschränkt. Die mechanische Stabilität der aufgespritzten Pulverschicht auf der einlagigen oder mehrlagigen Basisschicht wird durch die Basisschicht selbst gewährleistet. Darüber hinaus entfällt gegenüber einem Gasdiffusionskörper aus einer Basisschicht und einer mit dieser verbundenen Sinterschicht der zusätzliche Verfahrensschritt des Verbindens. Noch ein weiterer Vorteil besteht darin, dass sich im Falle eines Auftragens mehreren Zusatzschichten beliebige Porösitätsgradienten innerhalb der Zusatzschichten einstellen lassen.

Gemäß einer Ausführungsform der vorliegenden Erfindung sind mehrere fest miteinander verbundene Basisschichten vorgesehen, die gemeinsam einen Basisschichtverbund bilden. Die Verbindung mit einzelnen Basisschichten, die jeweils aus elektrisch leitendem Steckmetall, aus elektrisch leitendem Gewebe, Gitter oder Vlies oder aus einer elektrisch leitenden, mit Öffnungen versehenen Metallplatte hergestellt sind, kann ebenso wie beim Stand der Technik beispielsweise unter Einsatz eines Walz- oder Schweißverfahrens erfolgen. Auch können Basisschichten mit unterschiedlich großen Maschenweiten bzw. Durchgangsöffnungen miteinander verbunden werden, um einen gradierten Basisschichtverbund zu erzeugen, bei dem die Größe der Maschenweite bzw. die Größe der Durchgangsöffnungen in Richtung der zumindest einen Zusatzschicht bevorzugt abnimmt.

Die zumindest eine Zusatzschicht ist bevorzugt unmittelbar auf die zumindest eine Basisschicht oder auf den Basisschichtverbund aufgetragen, also ohne dazwischen angeordnete Schichten.

Vorteilhaft weist die Zusatzschicht eine mittlere Porengröße auf, die geringer als die mittlere Größe der Durchgangsöffnungen der zumindest einen Basisschicht oder des Basisschichtverbunds ist, insbesondere derart gering, dass ausgeschlossen ist, dass ein zu hoher einseitiger Druck während der Elektrolyse dazu führt, dass die Membran und/oder die Elektrode einer mit einem erfindungsgemäßen Gasdiffusionskörper ausgestatteten elektrochemischen Zelle in die Poren der Zusatzschicht gedrückt und beschädigt wird bzw. werden. Die geeignete mittlere Porengröße der Zusatzschicht ist dabei abhängig von den während der Elektrolyse auftretenden Drücken des jeweiligen Elektrolyseprozesses.

Gemäß einer Ausgestaltung der vorliegenden Erfindung handelt es sich bei den Partikeln aus elektrisch leitendem Material um Titanpartikel. Titanpartikel haben sich sowohl in Bezug auf die Fertigung als auch in Bezug auf die Funktionalität der Zusatzschicht als sehr vorteilhaft erwiesen.

Bevorzugt enthält das pulverförmige Material Zusätze, welche die Eigenschaften, insbesondere die Oxidationsbeständigkeit der Partikel aus elektrisch leitendem Material verbessern, bevorzugt Zusätze in Form von Platinpartikeln, Goldpartikeln, Iridiumpartikeln oder einer Kombination von diesen.

Ferner schafft die folgende Erfindung zur Lösung der eingangs genannten Aufgabe eine elektrochemische Zelle mit zumindest einem Gasdiffusionskörper gemäß der vorliegenden Erfindung sowie einen Elektrolyseur mit zumindest einer erfindungsgemäßen elektrochemischen Zelle.

Darüber hinaus schafft die vorliegende Erfindung ein Verfahren zur Herstellung eines erfindungsgemäßen Gasdiffusionskörpers, bei dem auf eine Durchgangsöffnungen aufweisende Basisschicht, die ein elektrisch leitendes Streckmetall, ein elektrisch leitendes Gewebe oder Gitter oder eine elektrisch leitende, mit Öffnungen versehene Metallplatte aufweist, pulverförmiges Material unter Einsatz eines thermischen Spritzverfahrens zur Erzeugung einer Zusatzschicht aufgetragen wird, wobei das pulverförmige Material zumindest zum Großteil aus Partikeln aus elektrisch leitendem Material besteht, insbesondere zu einem Anteil von wenigstens 70 Gew.-%, bevorzugt zu einem Anteil von wenigstens 90 Gew.-%.

Bevorzugt werden übereinander mehrere Zusatzschichten unter Einsatz eines thermischen Spritzverfahrens aufgetragen, wobei sich die Zusammensetzung des pulverförmigen Materials, das für die einzelnen Zusatzschichten verwendet wird, voneinander unterscheiden kann. Gleiches gilt für die eingestellte Porosität jeder Zusatzschicht.

Vorteilhaft bildet die Basisschicht die oberste Schicht eines eine Vielzahl von Basisschichten aufweisenden Basisschichtverbunds, bei dem die einzelnen Basisschichten insbesondere unter Einsatz eines Walzverfahrens oder eines Löt- oder Schweißverfahrens miteinander verbunden sind.

Gemäß einer Ausgestaltung der vorliegenden Erfindung wird die Zusatzschicht mit einer mittleren Porengröße hergestellt, die geringer als die mittlere Größe der Durchgangsöffnungen der zumindest einen Basisschicht oder des Basisschichtverbunds ist.

Vorteilhaft handelt es sich bei den Partikeln aus elektrisch leitendem Material um Titanpartikel.

Bevorzugt enthält das pulverförmige Material Zusätze, welche die Eigenschaften, insbesondere die Oxidationsbeständigkeit der Partikel aus elektrisch leitendem Material verbessern, bevorzugt Zusätze in Form von Platinpartikeln, Iridiumpartikeln oder eine Kombination von diesen.

Auch wenn bislang nur die Rede von Elektrolyse bzw. Elektrolysezellen war, sei darauf hingewiesen, dass die vorliegende Erfindung analog auf galvanische Zellen übertragbar ist. Eine galvanische Zelle ist eine zur Elektrolysezelle komplementäre Zelle zur Spontanumwandlung von chemischer in elektrische Energie. Ein bekannter Vertreter einer solchen galvanischen Zelle ist insbesondere die Brennstoffzelle.

Weitere Merkmale und Vorteile der vorliegenden Erfindung werden anhand der nachfolgenden Beschreibung eines Gasdiffusionskörpers gemäß einer Ausführungsform der vorliegenden Erfindung unter Bezugnahme auf die beiliegende Zeichnung deutlich. Darin ist
Figur 1 eine schematische Ansicht eines Elektrolyseurs gemäß einer Ausführungsform der vorliegenden Erfindung und
Figur 2 eine schematische Ansicht eines Gasdiffusionskörpers gemäß einer Ausführungsform der vorliegenden Erfindung, der eine Komponente des in Figur 1 dargestellten Elektrolyseurs bildet.

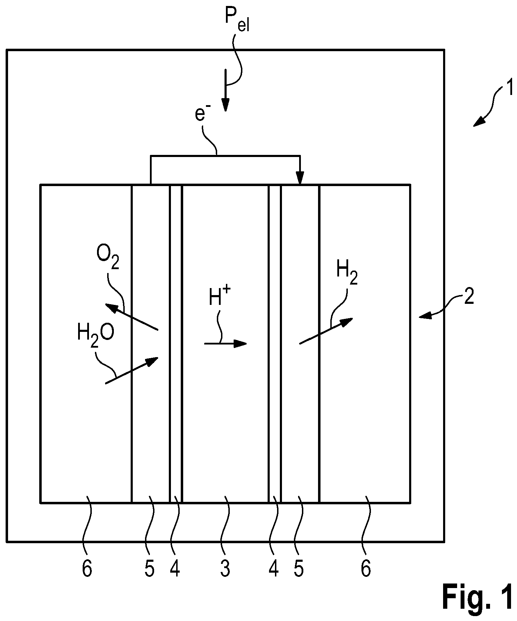

Figur 1 zeigt einen Elektrolyseur 1 gemäß einer Ausführungsform der vorliegenden Erfindung, der als PEM-Elektrolyseur aufgebaut ist. Der Elektrolyseur 1 umfasst eine Vielzahl von als Stacks zusammengefassten Elektrolysezellen 2, von denen in Figur 1 jedoch exemplarisch nur eine dargestellt ist. Die Elektrolysezelle 2 besteht aus zwei Halbzellen, die durch eine protonendurchlässige Polymermembran 3 getrennt sind, die den Elektrolyt bildet. Beide Seiten der Polymermembran 3 sind mit einer Elektrode 4 versehen, die vorliegend aus dünnen Edelmetallschichten bestehen. An die Elektroden 4 schließen sich wiederrum Gasdiffusionskörper 5 an, die gasdurchlässig sowie aus einem elektrisch leitfähigen Material hergestellt sind und die Elektroden 4 jeweils mit einer bipolaren Platte 6 verbinden.

Zur Durchführung einer Elektrolyse wird an den Elektroden 4 eine äußere Spannung Pₑₗ angelegt. Ferner wird die Halbzelle auf der Anodenseite mit voll entsalztem Wasser geflutet. Die katalytische Wirkung der Elektroden 4 führt zur Zersetzung des Wassers. Es entstehen Sauerstoff, freie Elektroden und positiv geladene Wasserstoffionen bzw. Protonen. Die H⁺-Ionen treten durch die Polymermembran 3 hindurch und rekombinieren mit den Elektronen zu Wasserstoff.

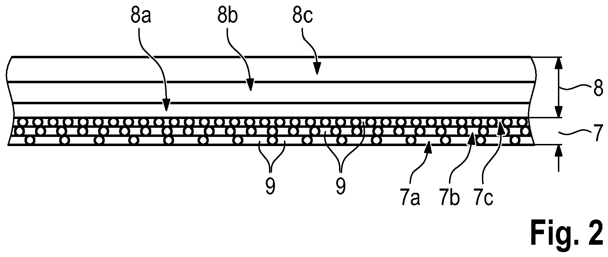

Figur 2 zeigt den Aufbau eines Gasdiffusionskörpers 5 der in Figur 1 dargestellten Elektrolysezelle 2. Der Gasdiffusionskörper 5 umfasst einen Basisschichtverbund 7 und einen Zusatzschichtverbund 8. Der Basisschichtverbund 7 umfasst vorliegend drei Basisschichten 7a, 7b und 7c, wobei der Basisschichtverbund 7 grundsätzlich auch eine andere Anzahl von Basisschichten aufweisen kann. Auch das Vorsehen einer einzelnen Basisschicht ist möglich. Jede Basisschicht 7a, 7b und 7c ist aus elektrisch leitendem Streckmetall hergestellt, das zwischen seinen Maschen Durchgangsöffnungen 9 definiert. Die Größe der Durchgangsöffnungen 9 bzw. die Maschenweite der die Basisschichten 7a, 7b und 7c bildenden Streckmetalle nimmt in Richtung des Zusatzschichtverbunds 8 ab, wodurch ein gradierter Basisschichtverbund 7 erzeugt wird. Grundsätzlich ist es aber auch möglich, die Größe der Durchgangsöffnungen 9 bzw. die Maschenweite der Basisschichten 7a, 7b und 7c einheitlich zu wählen. Die Basisschichten 7a, 7b und 7c sind zur Bildung des Basisschichtverbunds fest miteinander verbunden, was unter Einsatz eines Walz-, Löt- oder Schweißverfahrens erfolgen kann. An dieser Stelle sei darauf hingewiesen, dass die Basisschichten 7a, 7b und 7c nicht aus Streckmetallen hergestellt sein müssen. Alternativ können sie auch aus einem elektrisch leitenden Gewebe oder Gitter oder aus einer elektrisch leitenden, mit Öffnungen versehenen Metallplatte gefertigt sein.

Der Zusatzschichtverbund 8 ist stoffschlüssig mit dem Basisschichtverbund 7 verbunden. Er umfasst vorliegend drei Zusatzschichten 8a, 8b und 8c, die untereinander ebenfalls stoffschlüssig miteinander verbunden sind. Die Anzahl der Zusatzschichten ist grundsätzlich variabel. Auch hier ist das Vorsehen einer einzelnen Zusatzschicht möglich. Erfindungsgemäß sind die Zusatzschichten 8a, 8b und 8c als pulverförmiges Material unter Einsatz eines thermisches Spritzverfahrens auf die oberste Basisschicht 7c des Basisschichtverbundes 7 aufgetragen. Das pulverförmige Material besteht zumindest zum Großteil aus Partikeln aus elektrisch leitendem Material, vorliegend aus Titanpartikeln, wobei der Anteil der Partikel aus elektrisch leitendem Material vorliegend wenigstens 90 Gew.-% beträgt. Das pulverförmige Material enthält zudem Zusätze, welche die Eigenschaften der Partikel aus elektrisch leitendem Material verbessern. Vorliegend handelt es sich bei den Zusätzen um Platinpartikel, um die Oxidationsbeständigkeit der Partikel aus elektrisch leitendem Material zu optimieren. Alternativ können aber auch Goldpartikel oder Iridiumpartikel oder Kombinationen solcher Partikel eingesetzt werden. Die Zusatzschichten 8a, 8b und 8c sind porös ausgebildet, wobei die Porosität derart eingestellt ist, dass die mittlere Porengröße der Zusatzschichten 8a, 8b und 8c jeweils geringer als die mittlere Größe der Durchgangsöffnungen 9 der Basisschichten 7a, 7b und 7c ist. Darüber hinaus ist der Zusatzschichtverbund 8 vorliegend gradiert ausgebildet, und zwar derart, dass die Porosität der Zusatzschichten 8a, 8b und 8c ausgehend von der benachbart zum Basisschichtverbund 7 angeordneten Zusatzschicht 8a in Richtung des äußersten Zusatzschicht 8c abnimmt. Auf diese Weise wird insgesamt ein Gasdiffusionskörper 5 mit nach und nach abnehmender mittlerer Porengröße erzielt. Die gemäß Figur 2 aufgebrachten Gasdiffusionskörper 5 sind derart in die in Figur 1 dargestellte Elektrolytzelle 2 eingebaut, dass jeweils der Zusatzschichtverbund 8 zur benachbarten Elektrode 4 weist.

Ein wesentlicher Vorteil, der damit einhergeht, die Zusatzschichten 8a, 8b und 8c unter Einsatz eines thermischen Spritzverfahrens auf dem Zusatzschichtverbund 8a aufzutragen, besteht darin, dass die Fertigung aufgrund der hohen Depositionsraten schnell und ohne Einschränkung der Skalierung des Gasdiffusionskörpers 5 erfolgen kann. Darüber hinaus werden die Zusatzschichten 8a, 8b und 8c direkt beim Auftragen stoffschlüssig mit der jeweils darunterliegenden Schicht des Gasdiffusionskörpers 5 verbunden, so dass zusätzliche Verfahrensschritte zum Verbinden von Zusatzschichtverbund 8 und Basisschichtverbund 7 entfallen. Darüber hinaus verleiht zumindest die oberste Basisschicht 7c dem Zusatzschichtverbund 8 eine gute mechanische Stabilität. Noch ein weiterer Vorteil, der mit dem thermischen Spritzen einher geht, besteht darin, dass sich die mittlere Porengröße sowie die Porengeometrie der Zusatzschichten 8a, 8b und 8c vergleichsweise einfach und genau einstellen lassen, wodurch sehr gute und reproduzierbare Arbeitsergebnisse erzielt werden.

Die Außenflächen des Zusatzschichtverbunds 8 können grundsätzlich einem weiteren Bearbeitungsschritt unterzogen werden, um die gewünschten Endabmessungen zu erzielen, insbesondere unter Einsatz eines mechanischen Bearbeitungsverfahrens, wie Schleifen, Polieren oder dergleichen.

Auch wenn zuvor eine elektrochemische Zelle in Form einer Elektrolysezelle beschrieben wurde, kann der erfindungsgemäße Gasdiffusionskörper 5 auch in eine galvanische Zelle eingebaut werden, insbesondere in einer Wasserstoffzelle.

Es sollte klar sein, dass die zuvor beschriebene Ausführungsform lediglich als Beispiel dient und den durch die beiliegenden Ansprüche definierten Schutzbereich nicht einschränkt.

### Bezugszeichenliste

- 1: Elektrolyseur
- 2: Elektrolysezelle
- 3: Polymermembran
- 4: Elektrode
- 5: Gasdiffusionskörper
- 6: Bipolarplatte
- 7: Basisschichtverbund
- 7a: Basisschicht
- 7b: Basisschicht
- 7c: Basisschicht
- 8: Zusatzschichtverbund
- 8a: Zusatzschicht
- 8b: Zusatzschicht
- 8c: Zusatzschicht
- 9: Durchgangsöffnung

## Patentansprüche

1. Gasdiffusionskörper (5) umfassend zumindest eine Durchgangsöffnungen (9) aufweisende Basisschicht (7a, 7b, 7c), die aus elektrisch leitendem Streckmetall, aus elektrisch leitendem Gewebe oder Gitter oder aus einer elektrisch leitenden, mit Durchgangsöffnungen versehenen Metallplatte hergestellt ist, **dadurch gekennzeichnet, dass** der Gasdiffusionskörper (5) zumindest eine Zusatzschicht (8a, 8b, 8c) aufweist, die als pulverförmiges Material unter Einsatz eines thermischen Spritzverfahrens aufgetragen ist, wobei das pulverförmige Material zumindest zum Großteil aus Partikeln aus elektrisch leitendem Material besteht, insbesondere zu einem Anteil von wenigstens 70 Gew.-%, bevorzugt zu einem Anteil von wenigstens 90 Gew.-%.

2. Gasdiffusionskörper (5) nach Anspruch 1, **dadurch gekennzeichnet, dass** mehrere fest miteinander verbundene Basisschichten (7a, 7b, 7c) vorgesehen sind, die gemeinsam einen Basisschichtverbund (7) bilden, wobei die Basisschichten (7a, 7b, 7c) bevorzugt unterschiedlich große Maschenweiten bzw. Durchgangsöffnungen aufweisen, deren Größe in Richtung der zumindest einen Zusatzschicht (8a, 8b, 8c) insbesondere abnimmt.

3. Gasdiffusionskörper (5) nach Anspruch 1 oder 2, **dadurch gekennzeichnet, dass** die zumindest eine Zusatzschicht (8a, 8b, 8c) unmittelbar auf die zumindest eine Basisschicht (7a, 7b, 7c) oder auf den Basisschichtverbund (7) aufgetragen ist.

4. Gasdiffusionskörper (5) nach einem der vorhergehenden Ansprüche, **dadurch gekennzeichnet, dass** die Zusatzschicht (8a) eine mittlere Porengröße aufweist, die geringer als die mittlere Größe der Durchgangsöffnungen (9) der zumindest einen Basisschicht (7c) oder des Basisschichtverbunds (7) ist.

5. Gasdiffusionskörper (5) nach einem der vorhergehenden Ansprüche, **dadurch gekennzeichnet, dass** es sich bei den Partikeln aus elektrisch leitendem Material um Titanpartikel handelt.

6. Gasdiffusionskörper (5) nach einem der vorhergehenden Ansprüche, **dadurch gekennzeichnet, dass** das pulverförmige Material Zusätze enthält, welche die Eigenschaften, insbesondere die Oxidationsbeständigkeit der Partikel aus elektrisch leitendem Material verbessern, bevorzugt Zusätze in Form von Platinpartikeln, Goldpartikeln, Iridiumpartikeln oder einer Kombination von diesen.

7. Elektrochemische Zelle mit zumindest einem Gasdiffusionskörper (5) nach einem der vorhergehenden Ansprüche.

8. Elektrolyseur (1) mit zumindest einer elektrochemischen Zelle nach Anspruch 7.

9. Verfahren zur Herstellung eines Gasdiffusionskörpers (5) nach einem der Ansprüche 1 bis 6, bei dem auf eine Durchgangsöffnungen (9) aufweisende Basisschicht, die ein elektrisch leitendes Streckmetall, ein elektrisch leitendes Gewebe oder Gitter oder eine elektrisch leitende, mit Öffnungen versehene Metallplatte aufweist, pulverförmiges Material unter Einsatz eines thermischen Spritzverfahrens zur Erzeugung einer Zusatzschicht aufgetragen wird, wobei das pulverförmige Material zumindest zum Großteil aus Partikeln aus elektrisch leitendem Material besteht, insbesondere zu einem Anteil von wenigstens 70 Gew.-%, bevorzugt zu einem Anteil von wenigstens 90 Gew.-%.

10. Verfahren nach Anspruch 9, **dadurch gekennzeichnet, dass** übereinander mehrere Zusatzschichten (8a, 8b, 8c) unter Einsatz eines thermischen Spritzverfahrens aufgetragen werden, wobei sich die Zusammensetzung des pulverförmigen Materials, das für die einzelnen Zusatzschichten (8a, 8b, 8c) verwendet wird, voneinander unterscheiden kann.

11. Verfahren nach Anspruch 9 oder 10, **dadurch gekennzeichnet, dass** die Basisschicht (7a, 7b, 7c) die oberste Schicht eines aus eine Vielzahl von Basisschichten (7a, 7b, 7c) aufweisenden Basisschichtverbunds (7) bildet, bei dem die einzelnen Basisschichten (7a, 7b, 7c) insbesondere unter Einsatz eines Walzverfahrens oder eines Löt- oder Schweißverfahrens miteinander verbunden sind.

12. Verfahren nach einem der Ansprüche 9 bis 11, **dadurch gekennzeichnet, dass** die Zusatzschicht (8a. 8b, 8c) mit einer mittlere Porengröße hergestellt wird, die geringer als die mittlere Größe der Durchgangsöffnungen (9) der zumindest einen Basisschicht (7a, 7b, 7c) oder des Basisschichtverbunds (7) ist.

13. Verfahren nach einem der Ansprüche 9 bis 12, **dadurch gekennzeichnet, dass** es sich bei den Partikeln aus elektrisch leitendem Material um Titanpartikel handelt.

14. Verfahren nach einem der Ansprüche 9 bis 13, **dadurch gekennzeichnet, dass** das pulverförmige Material Zusätze enthält, welche die Eigenschaften, insbesondere die Oxidationsbeständigkeit der Partikel aus elektrisch leitendem Material verbessern, bevorzugt Zusätze in Form von Platinpartikeln, Goldpartikeln, Iridiumpartikeln oder einer Kombination von diesen.
